# EUROPÄISCHE PATENTSCHRIFT

(11) **EP 0 450 290 B1**
(45) Veröffentlichungstag und Bekanntmachung des Hinweises auf die Patenterteilung: **05.01.1994**
(21) Anmeldenummer: 91102132.7
(22) Anmeldetag: 15.02.1991
(51) Int. Cl.: A01D 45/30, A01D 41/08, A01D 45/00, A01D 45/02

(54) **Selbstfahrende Vorrichtung zum Ernten von empfindlichem Erntegut wie Rizinuskapseln**
Self-propelled harvester for harvesting delicate crops such as castor-oil seeds
Moissonneuse automotrice pour la récolte des produits délicats tels que les graines de ricin

(30) Priorität: 02.04.1990 DE 4010504
(43) Veröffentlichungstag der Anmeldung: 09.10.1991
(73) Patentinhaber: CLAAS OHG, D-33426 Harsewinkel (DE); CENTRE NATIONAL DU MACHINISME AGRICOLE, DU GENIE RURAL, DES EAUX ET DES FORETS (CEMAGREF), F-92160 Antony (FR)
(72) Erfinder: Barbe, Paul, F-34160 Beaulieu (FR); Lyon, Claude, F-34170 Catelnau Le Lez (FR); Perret, François, F-34230 Paulhan (FR)
(74) Vertreter: Stiller, Leonhard, Dipl.-Ing.

(56) Entgegenhaltungen:
- DE-A- 3 008 283
- FR-A- 994 505
- GB-A- 2 200 526
- US-A- 3 596 447
- US-A- 3 597 906
- US-A- 3 648 443
- US-A- 3 827 219
- US-A- 4 679 386

## Beschreibung

Die Erfindung betrifft eine Vorrichtung zum Ernten von empfindlichem Erntegut wie Rizinuskapseln mittels Bürsten, welche paarweise, frontseitig an einem selbstfahrenden Trägerfahrzeug antreibbar gelagert sind.

Aus der US-A-4 679 386 ist eine derartige selbstfahrende Vorrichtung zum Ernten von Körnerfrüchten bekannt, die ein quer zur Fahrtrichtung angeordnetes angetriebenes Bürstenpaar aufweist. Dieses Bürstenpaar ist in der Höhe veränderbar, so daß entsprechend der Wuchshöhe das Bürstenpaar optimal eingestellt werden kann, um die im oberen Bereich vorhandenen Körner ausbürsten zu können. Eine derartige Einrichtung arbeitet ansich zufriedenstellend. Voraussetzung ist jedoch, daß die Wuchshöhe der einzelnen Stengel zueinander etwa gleich ist. Nur so kann gewährleistet sein, daß im oberen Bereich des Erntegutes vorhandene Körner ausgebürstet werden. Zum Ernten von Rizinuskapseln kann eine solche Einrichtung nicht verwendet werden, weil Rizinusstengel in ihrer Wuchshöhe sehr unterschiedlich sind, so daß aus der genannten US-Patentschrift bekannte Bürstenpaar nicht in der Lage ist, diesen breiten Bereich bearbeiten zu können.
Der vorliegenden Erfindung liegt daher die Aufgabe zugrunde, eine Vorrichtung der eingangs näher bezeichneten Art derart auszugestalten, daß mit ihr problemlos auch Rizinuskapseln auf schonende Art und Weise geerntet werden können. Dies wird erfindungsgemäß dadurch erreicht, daß die Bürsten zu mehreren Bürstenpaaren zusammengefaßt sind, wobei jede Bürste eine in Fahrtrichtung weisende, gegenüber dem Boden neigungsveränderbare Längsachse aufweist, und daß jedem Bürstenpaar ein die Pflanzenstengel nach unten ziehende gegenläufig angetriebenes Einzugswalzenpaar zugeordnet ist.
Auf diese Weise ist es möglich, den gesamten Bereich unterschiedlicher Wuchshöhe von Rizinuspflanzen optimal abzuernten.

Weitere vorteilhafte Ausführungsformen der Erfindung sind in den Unteransprüchen näher definiert.

Im folgenden soll die Erfindung anhand eines Ausführungsbeispieles und mehrerer dieses schematisch darstellender Figuren näher erläutert werden. Dabei zeigt:
- Fig. 1: den vorderen Teil der erfindungsgemäßen Erntevorrichtung in perspektivischer Darstellung,
- Fig. 2: den erntewirksamen Teil der in Fig. 1 dargestellten Vorrichtung in der Seitenansicht,
- Fig. 3: eine Teilvergrößerung aus Fig. 2.
- Fig. 4: in Abwandlung von Fig. 2 und 3 eine Reiheneinheit mit hydraulischen und mechanischem Antrieb.

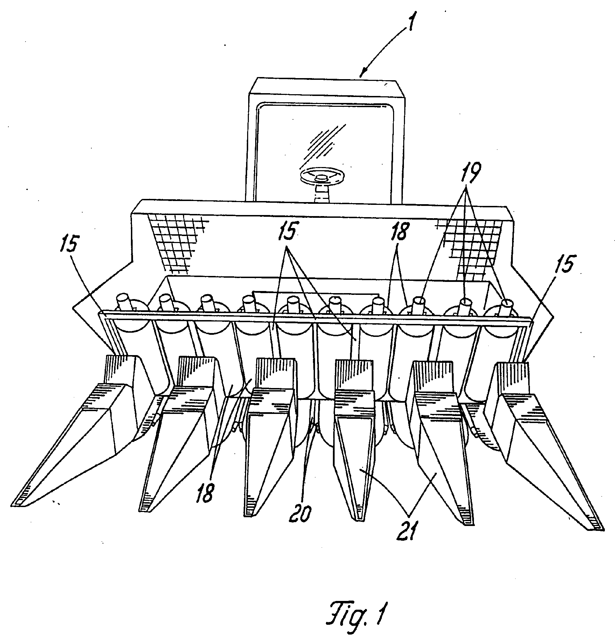

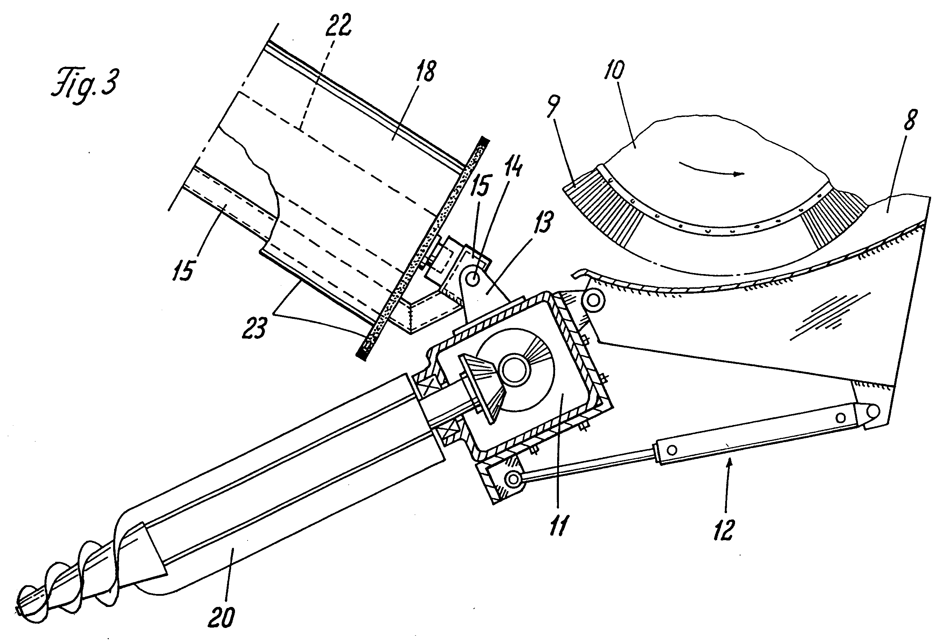

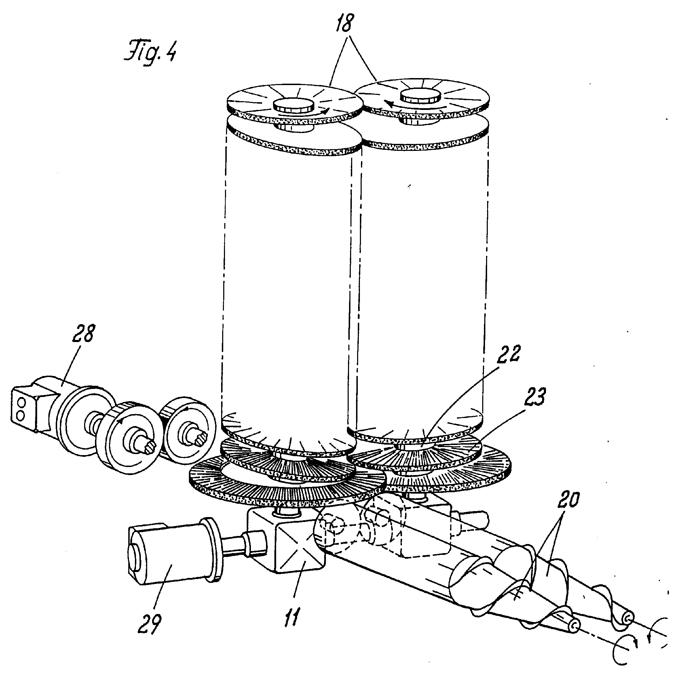

Mit 1 ist ein selbstfahrendes Trägerfahrzeug bezeichnet, mit dem wie in bekannter Weise bei Mähdreschern, Schrägfördererkanal 2 verschwenkbar verbunden ist. Zu diesem Zweck ist eine Kolbenzylindereinheit 3 vorgesehen, dessen Kolbenstange 4 mit dem Schrägfördererkanal 2 und dessen Zylinder 5 mit dem vorderen Teil des Trägerfahrzeugs 1 verbunden ist.
Im Fördererkanal 2 sind Einzugsbänder 6 antreibbar gelagert, die mit quer zur Transportrichtung vorgesehenen Borstenreihen 7 bestückt sind.
Stirnseitig mit dem Schrägförderer 2 ist über nicht dargestellte Schnellkupplungen eine Sammelmulde 8 verbunden, in welcher eine mit Borsten 9 besetzte Transportschnecke 10 gelagert ist. Mit der dem Schrägfördererkanal abgewandten Stirnseite der Sammelmulde 8 sind für jede Reiheneinheit ein Getriebegehäuse 11 schwenkbar verbunden. Zu diesem Zweck stützt sich eine hydraulische Kolbenzylindereinheit 12 zwischen der Sammelmulde 8 und dem Winkelgetriebegehäuse 11 an. Letzteres weist eine Konsole 13 auf, in der ein um Bolzen 14 verschwenkbarer Rahmen 15 gelagert ist.

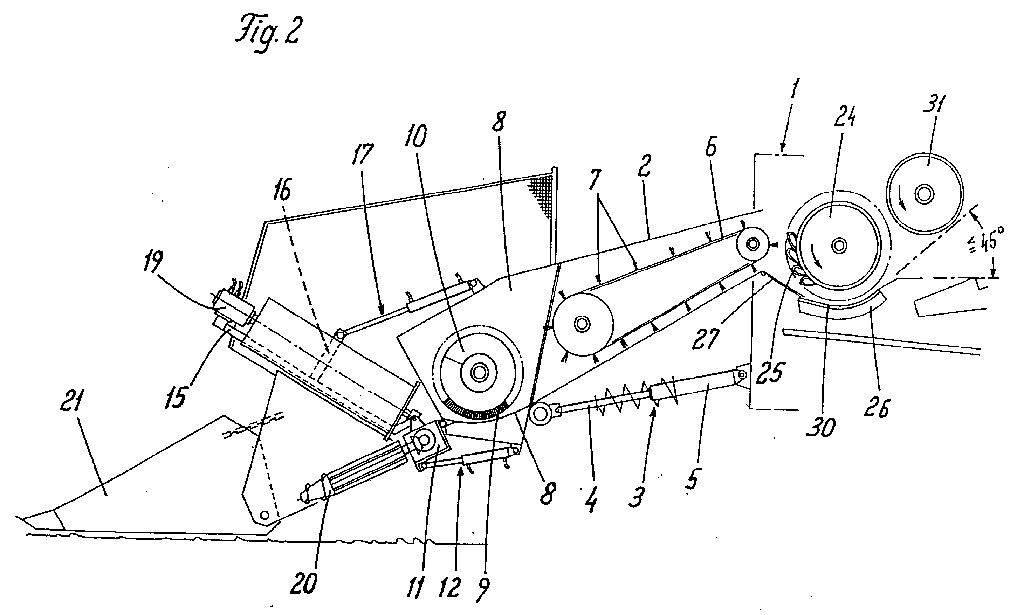

In Fig. 2 ist angedeutet, daß dieser Rahmen 15 über einen Arm 16 mit einer Kolbenzylindereinheit 17 in Verbindung steht, die an der Sammelmulde 8 angelenkt ist. Auf diese Weise ist es möglich, den gesamten Rahmen 15 um die Bolzen 14 zu verschwenken. Der Rahmen 15 selbst dient zur Aufnahme mehrerer Bürstenpaare 18, wobei jede Bürste beispielsweise über einen separaten Ölmotor 19 angetrieben ist. Unterhalb der Bürstenpaare 18 sind Einzugswalzen 20 vorgesehen, die einendig im Getriebegehäuse 11 antreibbar gelagert sind. Den Einzugswalzen 20 sind, wie bei Maiserntemaschinen bekannt, Halmteiler 21 = Bürstenachse vorgeordnet.
Aus Fig. 1 wird deutlich, daß jeweils einem Bürstenpaar 18 auch ein Einzugswalzenpaar 20 zugeordnet ist. Wie die Fig. 4 zeigt, besteht jede Bürste aus einer Achse 22, auf die Borsten 23 schneckenwindungsartig aufgesetzt sind. Um ein einwandfreies Abbürsten der Rizinuskapseln von den Stengeln zu erreichen, greifen dabei die Borstenreihen zweier benachbarten Bürsten eines Bürstenpaares 18 ineinander. Ferner zeigt die Fig. 4 in Abwandlung zu den Figuren 1, 2 und 3, daß die Bürstenpaare 18 über die Winkelgetriebe 11 und die Einzugswalzen 20 über Oelmotoren 28,29 angetrieben sein können.
Während des Betriebes der zuvor beschriebenen erfindungsgemäßen Vorrichtung werden die Rizinusstengel während der Vorfahrtbewegung des Trägerfahrzeugs 1 von den Einzugswalzen 20 ergriffen und nach unten auf den Acker gezogen, wobei gleichzeitig durch die Bürstenpaare 18 die Kapseln von den Stengeln gebürstet werden. Diese Kapseln werden dann in die Sammelmulde 8 geschleudert und von dort durch die Transportschnecke 10 dem Schrägförderer 2 zugeführt. Dieser transportiert die Rizinuskapseln zu der Dreschtrommel 24, welche vollzylindrisch ausgebildet und an ihrem Umfang mit weichen Schlaglappen 25 besetzt ist. Der der Dreschtrommel 24 zugeordnete Boden 26 ist vollflächig ausgebildet und besteht vorzugsweise aus einem mit Profilen versehen elastischen Belag 30. Der Zwischenraum zwischen dem Schrägfördererkanal 2 und dem Boden 26 ist durch ein glattes Übergabeblech 27 überbrückt, welches zum Boden 26 hin stark geneigt verläuft, um ein sicheres Abgleiten des kleinteiligen Dreschgutes zur Dreschtrommel hin zu gewährleisten. Die in dem aus Boden 26 und Dreschtrommel 24 gebildeten Dreschwerk aus den Kapseln ausgelösten Rizinusbohnen werden dann gemeinsam mit den aufgebrochenen Kapselteilen einer Übergabetrommel 31 ansich bekannten und nicht näher dargestellten Reinigungsorganen übergeben. Um möglichst schonend auf die bruchempfindlichen Bohnen einzuwirken, ist der Mantel der Übergabetrommel 31 vollflächig, kreisrund ausgebildet und besteht ggf. aus elastischem Material.

### Bezugszeichenübersicht

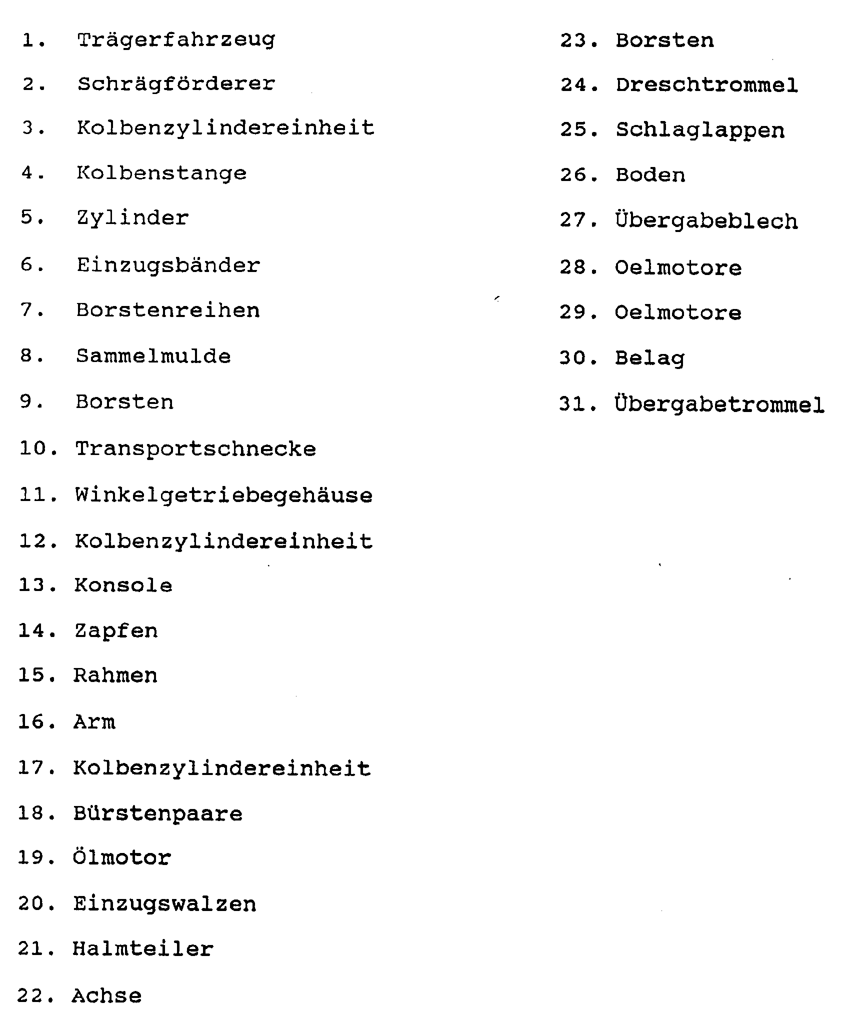

## Patentansprüche

1. Vorrichtung zum Ernten von empfindlichen Erntegut wie Rizinuskapseln mittels Bürsten, welche paarweise, frontseitig an einem selbstfahrenden Trägerfahrzeug antreibbar gelagert sind, **dadurch gekennzeichnet**, daß die Bürsten zu mehreren Bürstenpaaren (18) zusammengefaßt sind, wobei jede Bürste eine in Fahrtrichtung weisende, gegenüber dem Boden neigungsveränderbare Längsachse (22) aufweist, und daß jedem Bürstenpaar (18) ein die Pflanzenstengel nach unten ziehendes, gegenläufig angetriebenes Einzugswalzenpaar (20) zugeordnet ist.

2. Vorrichtung nach Anspruch 1, **dadurch gekennzeichnet**, daß die Einzugswalzenpaare (20) unabhängig von den Bürsten (18) in Fahrtrichtung neigungsveränderbar sind.

3. Vorrichtung nach den Ansprüchen 1 und 2, **dadurch gekennzeichnet**, daß die Bürstenpaare (18) und die Einzugswalzen (20) an einer höhenverlagerbaren Sammelmulde (8) gelagert sind.

4. Vorrichtung nach den Ansprüchen 1 bis 3, **dadurch gekennzeichnet**, daß die Einzugswalzen (20) einendig in einem Getriebegehäuse (11) gelagert sind, wobei am letzterem schwenkbar die Bürstenpaare (18) und das Getriebegehäuse (11) selbstschwenkbar an der Sammelmulde (8) befestigt sind bzw. ist.

5. Vorrichtung nach den Ansprüchen 1 bis 4, **dadurch gekennzeichnet**, daß mit dem Getriebegehäuse (11) der Einzugswalzen (20) ein die Bürstenpaare (18) aufnehmender Rahmen (15) schwenkbar verbunden ist.

6. Vorrichtung nach den Ansprüchen 1 bis 5, **dadurch gekennzeichnet,** daß jedes Bürstenpaar (18) über eine Ölmotor (19) antreibbar ist.

7. Vorrichtung nach den Ansprüchen 1 bis 6, **dadurch gekennzeichnet,** daß die Sammelmulde (8) eine mit Borsten (9) besetzte Transportwalze (10) aufweist, die quer zur Fahrtrichtung antreibbar gelagert ist.

8. Vorrichtung nach den Ansprüchen 1 bis 7, **dadurch gekennzeichnet,** daß die Sammelmulde (8) mit einem Schrägförderer (2) über ansich bekannte Schnellkupplungen leicht lösbar verbunden ist, wobei der Schrägförderer (2) selbst ebenfalls über ansich im Mähdrescherbau bekannte Kupplungen mit dem Trägerfahrzeug (1) schwenkbar verbunden ist.

9. Vorrichtung nach den Ansprüchen 1 bis 8, **dadurch gekennzeichnet**, daß zwischen dem Schrägfördererkanal (2) und der Dreschtrommel (24) ein stark geneigtes Übergangsblech (27) vorhanden ist, so daß die Gutübergabe vom Schrägförderer zur Dreschtrommel gleitend abwärts erfolgt.

10. Vorrichtung nach den Ansprüchen 1 bis 9, **dadurch gekennzeichnet**, daß der Übergang zwischen Dreschtrommel - Dreschkorb zum Schüttler einen von 45° einnimmt.

## Claims

1. An apparatus for harvesting delicate crop material such as castor-oil beans by means of brushes which are mounted drivably in pairs at the front on a self-propelled carrier vehicle, characterised in that the brushes are combined together to form a plurality of pairs (18) of brushes, wherein each brush has a longitudinal axis (22) which faces in the direction of travel and which is variable in inclination relative to the ground, and that associated with each pair of brushes (18) is a pair (20) of draw-in rollers which are driven in opposite relationship and which pull the plant stalks downwardly.

2. Apparatus according to claim 1 characterised in that the pairs (20) of draw-in rollers are variable in inclination in the direction of travel independently of the brushes (18).

3. Apparatus according to claims 1 and 2 characterised in that the pairs of brushes (18) and the draw-in rollers (20) are mounted on a collecting tray (8) which is displaceable heightwise.

4. Apparatus according to claims 1 to 3 characterised in that the draw-in rollers (20) are mounted at one end in a transmission housing (11), wherein the pairs (18) of brushes are fixed pivotably to the latter and the transmission housing (11) is self-pivotably fixed to the collecting tray (8).

5. Apparatus according to claims 1 to 4 characterised in that a frame (15) which carries the pairs (18) of brushes is pivotably connected to the transmission housing (11) of the draw-in rollers (20).

6. Apparatus according to claims 1 to 5 characterised in that each pair (18) of brushes is drivable by way of an oil motor (19).

7. Apparatus according to claims 1 to 6 characterised in that the collecting tray (8) has a transport roller (10) which is fitted with bristles (9) and which is mounted drivably transversely to the direction of travel.

8. Apparatus according to claims 1 to 7 characterised in that the collecting tray (8) is easily releasably connected to an inclined conveyor (2) by way of per se known quick-action couplings, wherein the inclined conveyor (2) itself is also pivotably connected to the carrier vehicle (1) by couplings which are known per se in the combine harvester art.

9. Apparatus according to claims 1 to 8 characterised in that disposed between the inclined conveyor passage (2) and the threshing drum (24) is a heavily inclined transfer plate (27) so that the transfer of material from the inclined conveyor to the threshing drum is effected by sliding downwards.

10. Apparatus according to claims 1 to 9 characterised in that the transfer between the threshing drum-concave and the walker is at an angle of 45°.

## Revendications

1. Dispositif de récolte de produits délicats tels que des graines de ricin au moyen de brosses qui sont montées de façon à être entraînées par paires sur le côté avant d'un véhicule porteur automoteur, caractérisé en ce que les brosses sont rassemblées en plusieurs paires de brosses (18), chaque brosse comprenant un axe longitudinal (22) orienté en direction de la marche et dont l'inclinaison peut être modifiée par rapport au sol, et en ce qu'à chaque paire de brosses (18) est associée une paire de cylindres d'amenée (20) entraînés en sens inverse et tirant les tiges des plantes vers le bas.

2. Dispositif selon la revendication 1, caractérisé en ce que les paires de cylindres d'amenée (20) peuvent être inclinés de façon variable en direction de la marche indépendamment des brosses (18).

3. Dispositif selon les revendications 1 et 2, caractérisé en ce que les paires de brosses (18) et les cylindres d'amenée (20) sont montés sur une auge collectrice (8) dont la position en hauteur peut être modifiée.

4. Dispositif selon les revendications 1 à 3, caractérisé en ce que les cylindres d'amenée (20) sont montés à une extrémité dans une boîte à engrenages (11), les paires de brosses (18) étant fixées de façon pivotante auxdits cylindres et la boîte à engrenages (11) étant fixée de façon pivotante à l'auge collectrice (18).

5. Dispositif selon les revendications 1 à 4, caractérisé en ce qu'un cadre (15) contenant les paires de brosses (18) est relié de façon pivotante à la boîte à engrenages (11) des cylindres d'amenée (20).

6. Dispositif selon les revendications 1 à 5, caractérisé en ce que chaque paire de brosses (18) peut être entraînée par un moteur à huile (19).

7. Dispositif selon les revendications 1 à 6, caractérisé en ce que l'auge collectrice (8) comprend un cylindre transporteur (10) équipé de brosses (9), qui est monté de façon à être entraîné transversalement à la direction de la marche.

8. Dispositif selon les revendications 1 à 7, caractérisé en ce que l'auge collectrice (8) est reliée à un convoyeur incliné (2) de façon facilement détachable par des accouplements rapides connus en soi, le convoyeur incliné (2) lui-même étant relié de façon pivotante au véhicule porteur (1) au moyen d'accouplements connus en soi dans le domaine des moissonneuses-batteuses.

9. Dispositif selon les revendications 1 à 8, caractérisé en ce qu'une tôle de transfert (37) fortement inclinée est prévue entre le canal transporteur incliné (2) et le tambour de battage (24), le transfert des produits entre le convoyeur incliné et le tambour de battage se faisant en glissant vers le bas.

10. Dispositif selon les revendications 1 à 9, caractérisé en ce que le passage entre le tambour de battage/contre-batteur et le secoueur est incliné de 45°.
